# FASCICULE DE BREVET EUROPEEN

(11) **EP 0 995 843 B1**
(45) Date de publication et mention de la délivrance du brevet: **02.01.2004**
(21) Numéro de dépôt: 98870219.7
(22) Date de dépôt: 21.10.1998
(51) Int. Cl.: E03C 1/08, F16K 31/08

(54) **Dispositif de limitation de débit**
Durchflussbegrenzer
Flow limitation means

(43) Date de publication de la demande: 26.04.2000
(73) Titulaire: STAAR SOCIETE ANONYME, B-1200 Bruxelles (BE)
(72) Inventeur: D'Alayer de Costemore d'Arc, Stéphane Marie André, 1474 Ways (BE)
(74) Mandataire: Overath, Philippe

(56) Documents cités:
- DE-B- 1 263 430
- US-A- 5 342 025

## Description

La présente invention se rapporte aux dispositifs de limitation de débit et plus particulièrement à leur moyen de commande permettant à l'utilisateur d'ajuster la limite de débit souhaitée et/ou de passer d'une limitation de débit à une autre, éventuellement au plein débit.

Dans les dispositifs de l'art antérieur, notamment ceux décrits dans les documents EP-A- 0 731 306, FR 1 186 758, la demande de brevet européen 98 870067.0 de la demanderesse, les moyens de commande sur lesquels l'utilisateur agit, nécessitent des éléments d'étanchéité car, étant en liaison physique avec le(s) moyen(s) assurant la limitation de débit, ils sont partiellement plongés en milieu liquide.

Or, tant pour des raisons de sécurité que de manipulation, assemblage, construction, il est souhaitable d'éviter les éléments d'étanchéité car ils ont une durée de vie limitée, requièrent des tolérances de fabrication plus élevées, un assemblage plus minutieux. En outre, dans le cas de l'eau par exemple, les impuretés, le calcaire se déposent sur la partie de la commande en contact avec l'eau et lorsque celle-ci est actionnée, ces dépôts rendent son déplacement plus dur et blessent les éléments d'étanchéité provoquant ainsi des fuites.

Le document US-A-5 342 025 représentant l'état de la technique le plus proche décrit un dispositif de réglage de débit proposant une commande magnétique comprenant une bague extérieure agissant sur une bague interne munie d'un obturateur. Ces deux bagues sont munies de matériaux magnétiques à polarités alternées pour que la rotation de la bague extérieure assure simultanément celle de la bague interne.

Le but de la présente invention est donc de remédier à ces inconvénients en proposant pour des dispositifs de limitation de débit une commande qui ne soit pas liée physiquement à l'élément de limitation de débit plongé dans le liquide.

Un autre but de la présente invention est de proposer des moyens permettant un assemblage aisé pour limiter les coûts de fabrication.

Un autre but est de proposer des moyens ne subissant qu'une faible usure pour augmenter leur durée de vie.

En vue de la réalisation de ces buts, le dispositif objet de l'invention est essentiellement caractérisé par le contenu de la revendication principale.

D'autres particularités, avantages, caractéristiques de l'invention ressortiront de la description donnée ci-après, à titre d'exemple, d'un mode de réalisation préféré auquel diverses modifications, améliorations peuvent être apportées sans pour autant sortir du cadre de l'invention et pour lesquels :
- la figure 1 est une vue de dessus partielle du dispositif de l'invention dans une position théorique,
- la figure 2 est une coupe du dispositif de l'invention vu de face, selon le plan 2-2 de la figure 1, en position de plein débit,
- la figure 2A est semblable à la figure 2 mais ne montre qu'un détail, le dispositif étant en position de limitation de débit,
- la figure 3 est une vue en perspective d'un élément du dispositif, notamment la soupape,
- la figure 3A est une vue partielle, en perspective d'un élément de guidage de la soupape représentée à la figure 3,
- la figure 3B est une vue en perspective d'un élément agissant sur la soupape de la figure 3,
- la figure 4 est une vue de dessus de l'assemblage des éléments des figures 3, 3A et 3B dans une position où ils limitent le débit,
- la figure 5 est semblable à la figure 4, les éléments étant dans la position de plein débit,
- les figures 6, 6A, 7 et 7A montrent schématiquement les positions relatives qu'occupent certains éléments du dispositif en position de limitation de débit et de plein débit.

Pour éviter de surcharger les figures, on n'a représenté sur chacune que les éléments nécessaires à la compréhension de l'invention.

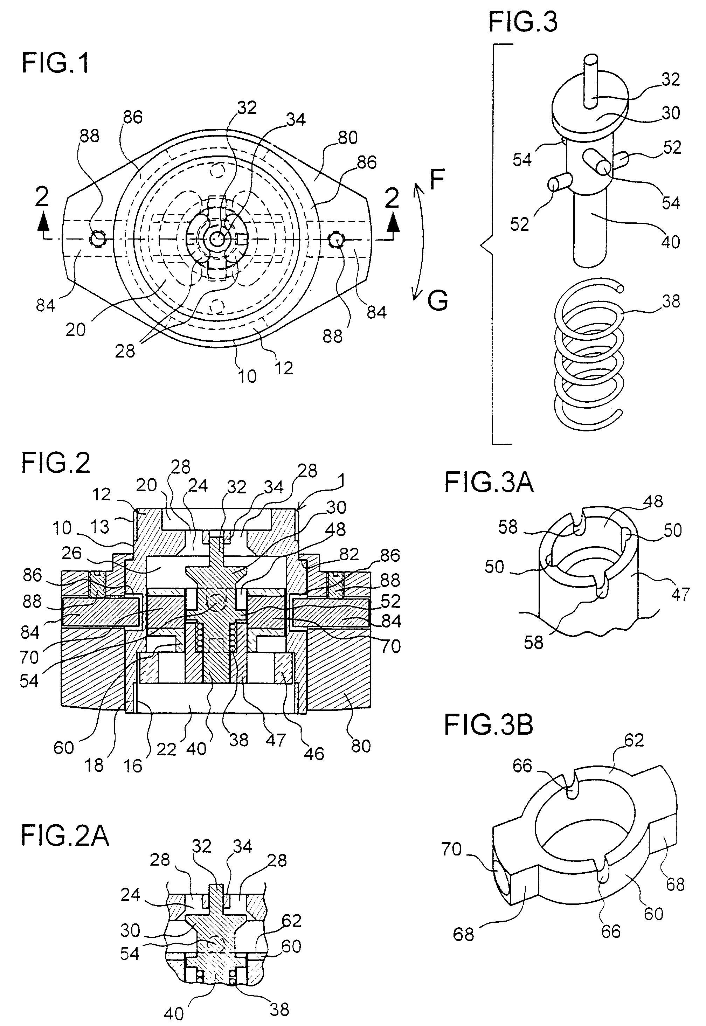

Le dispositif montré aux figures 1 et 2, proche de celui décrit dans la demande européenne 98 870067.0 de la demanderesse et ayant pour but de limiter le débit d'eau d'un robinet, est d'une forme sensiblement cylindrique et comprend un corps 10 dont la partie supérieure 12 porte un filet 13 externe pour pouvoir être vissé sur la sortie d'eau d'un robinet, mitigeur,... Le corps 10 comprend également un filet 16, cette fois interne, sur sa partie inférieure 18, pour recevoir par vissage un mousseur, briseur de jet,...

La partie supérieure 12 comporte une entrée d'eau 20, la partie inférieure 18 une sortie 22 reliées par des moyens de limitation de débit constitués de deux chambres 24, 26, concentriques mais de diamètre différent et d'une soupape 30 mobile; la plus petite chambre 24 ayant un profil conique étant connectée à l'entrée 20 par deux ouvertures 28. La soupape 30 est d'un diamètre proche de celui de la chambre 24, comporte un axe supérieur 32 guidé par une ouverture 34 axiale située entre les deux ouvertures 28 et est soumise à l'action des moyens élastiques 38, tel un ressort, situés autour de son axe inférieur 40 et la poussant toujours vers le haut de la chambre 24. Cet axe 40 coopère avec un élément de guidage 46 possédant une partie centrale 47 annulaire dont la surface intérieure 48 emprisonne les moyens élastiques 38 et possède deux gorges axiales 50, diamétralement opposées et guidant deux tétons 52 portés par ledit axe inférieur 40. Ainsi, la soupape 30 est guidée axialement lors de son déplacement entre la position de limitation de débit (figure 2A) et celle de plein débit (figure 2).

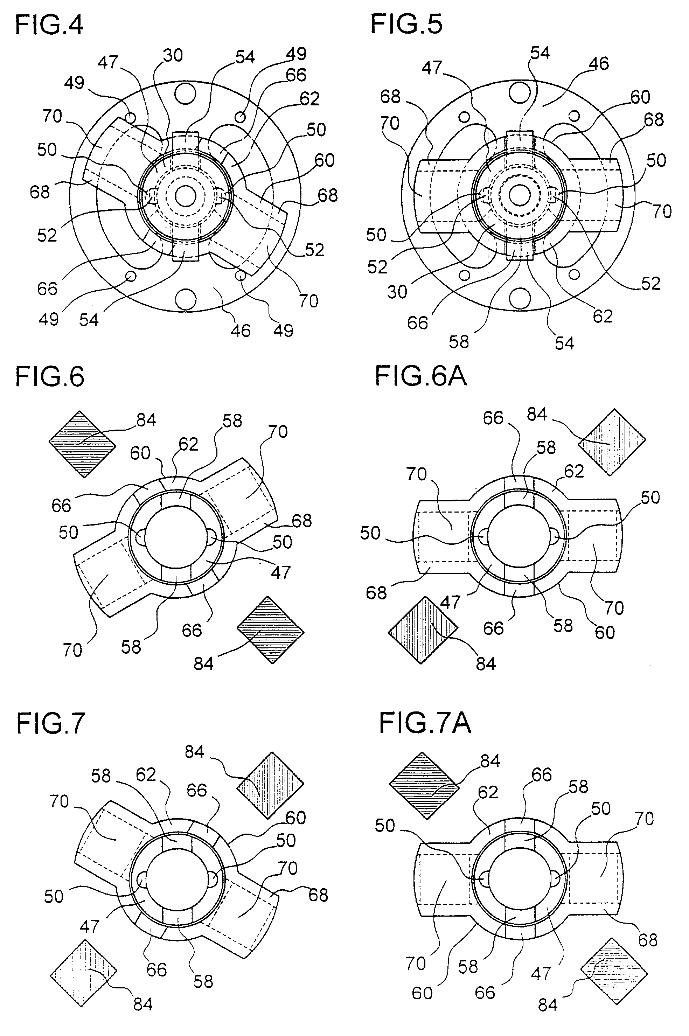

La soupape 30 comporte en outre deux composants, tels des tétons 54 situés à un niveau légèrement supérieur à celui des tétons 52, placés à 90° de ces derniers, d'un diamètre supérieur à celui des tétons 52 pour éviter toute erreur d'assemblage des pièces et pouvant glisser dans des gorges 58 prévues dans la partie centrale 47. Une commande annulaire 60 (figure 3B) montée en rotation autour de la partie centrale 47 sur un secteur de 60° limité par les arrêts 49 placés sur l'élément de guidage 46 (figure 4) lui procurant ainsi une rotation de 30° de part et d'autre de sa position centrale (figure 5), coopère avec les tétons 54 de la soupape 30 à l'aide de sa surface annulaire supérieure 62 et ses gorges 66 diamétralement opposées et de même taille que les gorges 58.

Pour éviter toute liaison mécanique et donc tout élément d'étanchéité, la commande annulaire 60 comporte deux logements 68 diamétralement opposés emprisonnant chacun des moyens magnétiques 70 tel un aimant, de même polarité.

Le dispositif comprend une commande externe 80 mobile telle une poignée circulaire (figures 1, 2) s'appuyant sur un redan 82 du corps 10 et comportant deux moyens magnétiques 84 tels des aimants diamétralement opposés et dont les faces en vis-à-vis des moyens magnétiques 70 sont de même polarité. Ces aimants 84 pénètrent chacun dans une gorge circulaire 86 pratiquée dans le corps 10 sur environ 90° et sont maintenus par une vis 88 ou tout autre moyen de fixation (axe, colle, sertissage...). Ainsi la poignée 80 peut tourner autour du corps 10 de 45° de part et d'autre d'une position centrale théorique montrée à la figure 1 (flèches F, G).

En l'absence de tout écoulement de liquide, les moyens de commande du dispositif se retrouvent dans l'une des positions représentées aux figures 6, 7 car les aimants 84 et 70, de même polarité, se repoussent mutuellement et donc la poignée 80 est à l'une des extrémités de la gorge 86 tandis que la commande 60 est contre une paire d'arrêts 49 (figure 4); les gorges 58 et 66 étant ainsi décalées angulairement.

Supposons que le dispositif soit dans la position de la figure 6 et que du liquide s'écoule par les ouvertures 28, sa pression sur la soupape 30 la fait descendre à l'encontre du ressort 38 jusqu'à ce que les tétons 54 rencontrent la surface supérieure 62 de la commande annulaire 60 qui restreint ce mouvement et donc limite le débit à l'espace entre la périphérie externe de la soupape 30 et la périphérie interne de la chambre 24 (figures 2A, 4); en pratique, le débit est limité à environ un tiers du plein débit.

Si l'utilisateur tourne la poignée 80 et donc les aimants 84 pour les amener vers la position de la figure 6A, la répulsion des aimants 70, 84 va augmenter jusqu'à ce qu'ils soient alignés puisque les arrêts 49 interdisent toute rotation de la commande 60 dans le sens de celui de la poignée 80, puis en poursuivant la rotation de la poignée 80, son amplitude étant de 45° de part et d'autre de la position centrale théorique tandis que celle de la commande 60 est limitée à 30°, le phénomène de répulsion des aimants 84, 70 fait en sorte que la commande 60 tourne dans le sens inverse de celui de la poignée 80 jusqu'à ce que les gorges 58 et 66 soient alignées (figures 5, 6A). A ce moment, les tétons 54 descendent dans les gorges 58, 66 sous la pression qu'exerce le liquide sur la soupape 30 et permettent à celle-ci de venir dans la chambre 26 (figure 2) autorisant ainsi le plein débit. Les tétons 54 étant dans les gorges 66 et 58, la commande 60 est immobilisée et les aimants 70 repoussant les aimants 84, ces derniers arrivent à l'autre extrémité de la gorge 86; le dispositif se trouve ainsi dans la position de la figure 6A.

Si maintenant, le débit du liquide arrivant à l'entrée 20 est diminué, le ressort 38 repousse la soupape 30 vers le haut et dès que les tétons 54 quittent les gorges 58, 66, les aimants 84 qui sont à l'extrémité des gorges 86, donc immobiles, repoussent les aimants 70 et font tourner horlogiquement la commande 60 jusqu'à ce qu'elle vienne contre l'autre paire d'arrêts 49. Le dispositif est donc dans la position de la figure 7 où les gorges 58 et 66 ne sont plus alignées et la limitation de débit à nouveau active car si le débit de liquide à l'entrée 20 est réaugmenté, les tétons 54 en rencontrant la surface 62 limiteront la descente de la soupape 30.

Si dans la position de la figure 7, l'utilisateur tourne la poignée 80 et donc les aimants 84 dans le sens horlogique, le phénomène de répulsion sera à nouveau maximum lorsque les aimants 84 passeront au-delà des aimants 70 (la commande 60 étant bloquée par les arrêts 49), ce qui fera pivoter la commande 60 dans le sens anti-horlogique jusqu'à l'alignement des gorges 58 et 66 (figure 7A) permettant la descente des tétons 54 et donc l'obtention du plein débit et le blocage de la commande 60. Les aimants 70, repoussent les aimants 84 et donc la poignée 80 à l'autre extrémité de la gorge 86 et le dispositif se retrouve dans la position de la figure 7A.

Si l'alimentation de liquide est réduite, la soupape 30 remonte sous à l'action du ressort 38, les tétons 54 s'échappent des gorges 58, 66, la commande 60 devient libre et les aimants 84 repoussent les aimants 70 jusqu'à ce que la commande 60 voit sa rotation anti-horlogique stoppée par les arrêts 49. Le dispositif se retrouve ainsi dans la position de limitation de débit représentée à la figure 6 et est prêt pour un nouveau cycle d'opérations.

Comme on le constate, l'absence de lien mécanique entre la soupape 30 immergée dans le liquide et la poignée de commande 80 placée à l'extérieur, à portée de main de l'utilisateur, évite tout problème d'étanchéité, de fuite,... En plus, ce montage peut être particulièrement approprié pour des liquides corrosifs puisqu'on peut réaliser la soupape 30 et les chambres 24, 26 dans une matière résistant à la corrosion et utiliser pour l'extérieur du corps 10 et la poignée 80 toute autre matière puisque ces éléments ne sont jamais en contact avec le liquide.

L'activation ou la désactivation de la limite de débit se fait simplement en tournant la poignée 80 dans un sens ou l'autre, par conséquent, l'usure des pièces est excessivement faible. En outre, en réalisant la soupape 30 ou tout au moins son axe 40 dans une matière magnétiquement perméable, on peut, grâce aux aimants 70, éviter le ressort 38 ce qui réduit aussi l'usure.

En munissant l'élément de guidage 46 dans sa partie centrale d'une vis positionnée comme décrit dans la demande européenne 98 870067.0, on peut régler la limite de descente de l'axe 40 de la soupape 30, donc la valeur du plein débit.
- 10: corps
- 12: partie supérieure de 10
- 13: filet de 12
- 16: filet de 18
- 18: partie inférieure de 10
- 20: entrée d'eau
- 22: sortie d'eau
- 24: chambre
- 26: chambre
- 28: ouvertures
- 30: soupape
- 32: axe supérieur
- 34: ouverture
- 38: moyens élastiques
- 40: axe
- 46: élément de guidage
- 47: partie centrale de 46
- 48: surface intérieure de 47
- 49: arrêts
- 50: gorges axiales
- 52: tétons
- 54: tétons
- 58: gorges
- 60: commande annulaire
- 62: surface supérieure de 60
- 66: gorges de 60
- 68: logement
- 70: aimant
- 80: poignée circulaire
- 82: redan
- 84: aimants
- 86: gorge circulaire
- 88: vis

## Revendications

1. Dispositif de limitation de débit comprenant des éléments de limitation de débit internes constitués par des chambres (24, 26) et une soupape (30) placés dans l'écoulement du liquide, une commande externe (80), magnétique, déplaçable entre deux positions extrèmes et associée à un élément de commande (60) mobile, magnétique, interne au dispositif, actionné à partir de la commande externe (80) et coopérant avec la soupape (30) pour permettre son déplacement entre une position de limitation de débit et une position de plein débit,
**caractérisé en ce que** l'élément de commande interne (60) possède des aimants dont les faces situées vis-à-vis de celles des moyens magnétiques de la commande externe (80) ont la même polarité, ladite commande externe (80) effectuant un mouvement d'une amplitude supérieure à celui de ladite commande interne (60) pour maintenir cette dernière à chaque extrémité de son mouvement de rotation dans une position où elle maintient la soupape (30) dans sa position de limitation de débit et **en ce que** la commande interne (60) présente une surface supérieure et une surface inférieure permettant, lors de son mouvement de rotation entre chacune de ses extrémités, à la soupape (30) de se déplacer axialement vers sa position de plein débit.

2. Dispositif selon la revendication 1, **caractérisé en ce que** la commande interne (60) porte une surface supérieure annulaire (62) et des gorges (66) présentant une surface inférieure coopérant avec un composant (54) de la soupape (30).

3. Dispositif selon la revendication 2, **caractérisé en ce que** la rotation de la commande interne (60) positionne en regard du composant (54) de la soupape (30), soit la surface supérieure annulaire (62) pour obtenir une limitation du débit, soit la surface inférieure des gorges (66) pour assurer le plein débit.

4. Dispositif selon l'une quelconques des revendications 1 à 3, **caractérisé en ce que** la soupape (30) est soumise à l'influence de moyens élastiques (38) pour la ramener en position de limitation de débit.

5. Dispositif selon l'une des revendications 1 à 3, **caractérisé en ce qu'**au moins l'axe (40) de la soupape (30) est réalisé dans une matière magnétiquement perméable, de sorte que l'influence des moyens magnétiques ramène la soupape (30) en position de limitation de débit.

## Patentansprüche

1. Durchflussbegrenzungsvorrichtung, die innere Durchflussbegrenzungselemente umfasst, die Kammern (24, 26) und ein Ventil (30), die in der Strömung der Flüssigkeit platziert sind, und eine äußere, magnetische Steuerung (80) umfassen, die zwischen zwei Endpositionen hin- und herbewegbar und mit einem beweglichen, magnetischen Steuerungselement (60) verbunden ist, das sich innerhalb der Vorrichtung befindet, von der äußeren Steuerung (80) aus betätigt wird und mit dem Ventil (30) zusammenwirkt, um dessen Lageveränderung zwischen einer Position, die den Durchfluss begrenzt, und einer Position, die den unbegrenzten Durchfluss ermöglicht, zu erlauben,
**dadurch gekennzeichnet, dass** das innere Steuerungselement (60) Magnete aufweist, deren Seiten, die sich gegenüber denen der magnetischen Vorrichtungen der äußeren Steuerung (80) befinden, die gleiche Polung aufweisen, welche äußere Steuerung (80) eine Bewegung mit einer Amplitude durchführt, die größer ist als die der inneren Steuerung (60), um diese an jedem Ende ihrer Drehbewegung in einer Position zu halten, in der sie das Ventil (30) in seiner Durchflussbegrenzungsposition hält, sowie dadurch, dass die innere Steuerung (60) eine obere Fläche und einer untere Fläche aufweist, die dem Ventil (30) bei seinen Drehbewegungen zwischen seinen jeweiligen Enden ermöglicht, sich axial in Richtung auf seine Position zu bewegen, die den unbegrenzten Durchfluss erlaubt.

2. Vorrichtung nach Anspruch 1, **dadurch gekennzeichnet, dass** die innere Steuerung (60) eine obere, ringförmige Fläche (62) und Kerben (66) aufweist, die eine untere Fläche aufweisen, die mit einem Teil (54) des Ventils (30) zusammenwirken.

3. Vorrichtung nach Anspruch 2, **dadurch gekennzeichnet, dass** die Drehung der inneren Steuerung (60) entweder die obere ringförmige Fläche (62) gegenüber dem Teil (54) des Ventils (30) positioniert, um eine Durchflussbegrenzung zu bewirken, oder aber die untere Fläche der Kerben (66), um den unbegrenzten Durchfluss zu gestatten.

4. Vorrichtung nach einem der Ansprüche 1 bis 3, **dadurch gekennzeichnet, dass** das Ventil (30) dem Einfluss von elastischen Mitteln (38) unterliegt, die es in seine Durchflussbegrenzungsposition zurückbringen.

5. Vorrichtung nach einem der Ansprüche 1 bis 3, **dadurch gekennzeichnet, dass** mindestens der Schaft (40) des Ventils (30) aus einem magnetisch durchlässigen Material gefertigt ist, sodass das Ventil (30) durch Einwirkung der magnetischen Vorrichtungen in die Durchflussbegrenzungsposition zurückgebracht wird.

## Claims

1. Flow limiting device comprising internal flow limiting elements including chambers (24, 26) and a valve (30) set in the liquid flow, a magnetic, external control (80), shiftable in-between two end-of-movement positions and associated to a magnetic, mobile control element (60) internal to the device, actuated by the external control (80) and cooperating with the valve (30) to allow its shifting between a flow-limiting position and a full-flow position,
**characterized in that** the internal control element (60) includes magnets having their ends located opposite those of the magnetic means of the external control (80) of the same polarity, said external control (80) undergoing a movement of a magnitude larger than that of the internal control (60) to maintain the latter at each end of its rotational movement in a position where it maintains the valve (30) in its flow-limiting position and **in that** the internal control (60) is provided with an upper surface and a lower surface allowing, upon its rotational movement in-between each of its end positions, the valve (30) to move axially towards its full-flow position.

2. Device according to claim 1, **characterized in that** the internal control (60) bears an upper annular surface (62) and grooves (66) providing a lower surface cooperating with a component (54) of the valve (30).

3. Device according to claim 2, **characterized in that** the rotation of the internal control (60) locates opposite the component (54) of the valve (30), either the upper annular surface (62) to obtain a limiting of the flow, or the lower surface of the grooves (66) to allow full-flow.

4. Device according to any of the claims 1 to 3, **characterized in that** the valve (30) undergoes the action of resilient means (38) to reset it in the flow-limiting position.

5. Device according to any of the claims 1 to 3, **characterized in that** at least the shaft (40) of the valve (30) is made of a magnetically permeable material, so that the action of the magnetic means resets the valve (30) in the flow-limiting position.
